# EUROPEAN PATENT SPECIFICATION

(11) **EP 2 109 535 B1**
(45) Date of publication and mention of the grant of the patent: **24.04.2013**
(21) Application number: 07874213.7
(22) Date of filing: 11.10.2007
(51) Int. Cl.: B29C 43/00, B32B 27/08, F41H 5/04

(54) **IMPACT-RESISTANT LIGHTWEIGHT POLYMERIC LAMINATES**
SCHLAGZÄHE, LEICHTE POLYMERE LAMINATE
STRATIFIÉS POLYMÈRES LÉGERS RÉSISTANTS AUX IMPACTS

(30) Priority: 11.10.2006 US 850723 P; 10.10.2007 US 870126
(43) Date of publication of application: 21.10.2009
(73) Proprietor: Chung, Sengshiu, Parsippany, NJ 07801 (US)
(72) Inventor: Chung, Sengshiu, Parsippany, NJ 07801 (US)
(74) Representative: Schmidt, Karsten
(86) International application number: PCT/US2007/081156
(87) International publication number: WO 2008/133703

(56) References cited:
- WO-A2-03/101729
- DE-A1- 3 716 004
- US-A- 4 081 581
- US-A- 4 121 014
- US-A- 5 846 620
- US-A1- 2003 096 106
- US-B1- 6 341 708
- US-B1- 6 387 477
- US-E- R E32 406

## Description

### BACKGROUND

The present invention relates to impact-resistant lightweight polymeric laminates. In particular, the present invention relates to impact-resistant light-weight rigid laminated polymeric articles for use in the construction and automotive industries, as well as in military applications.

The present invention also relates to impact-resistant lightweight polymeric laminates for ballistic protection such as armor, including body armor. The polymeric laminates of the present invention substantially increase the level of ballistic protection available to military and law enforcement personnel without increasing equipment weight.

The present invention further relates to light-weight transparent materials for ballistic protection, including materials for eye and face protection, that has ballistic impact resistance properties comparable to present non-transparent fiber reinforced polymer composite materials. At the same time the impact-resistant transparent materials of the present invention have optical properties comparable to commercially available transparent polymers presently used for eye and face protection.

Polycarbonates (PC) and polymethylmethacrylates (PMMA) are lightweight trans-parent polymers that have been used for decades as transparent impact-resistant structural and semi-structural materials. However, there is a substantial performance gap in the impact resistance of monolithic transparent polymers, such as polycarbonates, and that of ultra high strength fiber reinforced polymer composites. Because of the very high tensile strength of the fiber, the impact resistance (on a weight basis) of the fiber reinforced composites is typically much greater than that of monolithic polymers.

However, these composite materials cannot be used for transparent applications because they lack optical transparency. As a result, in military, law enforcement and construction applications, the level of eye and face protection is considerably less than that provided by the helmet used to cover the rest of the head. New lightweight materials for body protection are needed to provide adequate eye and face protection for soldiers, construction workers and law enforcement personnel.

Over the years there have been numerous developmental efforts to optimize the ballistic impact resistance of lightweight polymeric ballistic protection systems. The state of the art in lightweight transparent armor for use in law enforcement and the military has been unchanged for many years because of the lack of higher-performance component materials such as transparent ceramics, glass/ceramics, glass and plastics. For example, no new plastic has been commercialized for use in the volume manufacture of transparent protection for the face and eyes since polycarbonate was introduced into the market in 1958..

The performance of transparent impact-resistant materials has historically lagged behind that of opaque materials, when judged by the material's mass-efficiency parameter. In military uses, the most efficient designs of transparent armor intended to defeat fragmenta-tion from explosive ordnance have traditionally been monolithic or laminated plastic(s). Glass, because of its high density, is historically not competitive in defeating the irregularly shaped, and less-penetrating, fragment threats. The highest-performing transparent protection designed to defeat small-arms projectiles consists of a laminated glass/plastic composite.

Table 1 summarizes the advantages and disadvantages of three current transparent technologies: glass laminates, plastic laminates and plastic-glass composite laminates. Trans-parent plastic laminates have the advantage of being lightweight and retaining resident visibility after ballistic impact, but have as a major disadvantage being much lower in ballistic impact resistance.

**Table 1. Summary of current transparent materials**

| | **Advantages** | | **Disadvantages** | |
|---|---|---|---|---|
| Glass Laminates | ■ | Common technology | ■ | Thick and heavy |
| | ■ | Readily available | ■ | Glass spalling |
| | ■ | Relatively inexpensive | ■ | Poor resident visibility |
| Plastic Laminates | ■ | Very lightweight | ■ | Poor weatherability |
| | ■ | Excellent impact resistance | ■ | Poor abrasion/chemical resistance |
| | ■ | Good spall ply material | ■ | Relatively low ballistic resistance |
| | ■ | Has good resident visibility after ballistic impact | ■ | Relative expensive |
| Plastic-Glass Composite Laminates | ■ | 50% lighter and thinner than glass laminates | ■ | Service life sensitive to design and fabrication process |
| | ■ | Good thermal efficiency and weatherability | ■ | Spall ply abrasion/chemical |
| ■ | | Highest ballistic resistance capability | | resistance |
| | | | ■ | Poor resident visibility |
| ■ | | Significant design latitude | | |

In the late 1970s and early 1980's, impact-resistant transparent materials were devel-oped by laminating oriented polyolefin films together through fusion bonding. It was found that the ballistic impact resistance of laminated film was higher than that of polycarbonate at the same thickness. In fusion bonding, a stack of cross-plied, oriented films is heated to close to its melting temperature. Once the surface of each film within a stack was partially melted or softened, the films were then bonded together under a static pressure. However, this fusion bond laminated film technology encountered several major technique hurdles to commercial feasibility. The technical hurdles are as follows:
Long cycle time and labor intensive.
Visual defects such as milky appearance, whitening, striations, and opaqueness.
Non-bonding or delaminating of plies.
High variation in thickness control - more than 1.02 mm (0,04") for 2,54cm (1") thick laminates.

US 4121014, US 4081581, WO03/101729, DE 3716004, US 6387477, US R E32 406 E and US 5846620 disclose laminates comprising core polymer film layers created on at least one side with a heat fusible polymer layer. The laminates are used for ballistic protection. The characterizing features of the present invention, however, are not shown in these documents.

Hence, there remains a need for an innovative high performance lightweight polymeric material that has ballistic impact resistance protection efficiency comparable to fiber reinforced polymer matrix composite materials. There is a particular need for transparent impact resistant materials with optical properties comparable to commercial plastic and/or glass transparent impact-resistant materials.

### SUMMARY OF THE INVENTION

This need is met by the present invention. It has now been discovered that polymer films can be laminated together by interfacial heat sealable films layered there-between to form film laminates with improved impact resistance over monolithic polymer sheets of the same thickness. The layers form an integral sheet under heat and pressure possessing the tensile strength and flexural modulus required for impact resistance from high speed projectiles. The laminates of the present invention take advantage of polymer fracture mechanics through use of mechanically isolated laminate layers that maximize energy absorption by containment of the deformation of each film layer.

It is known that the fracture mechanism of a polymer solid will undergo a change from plane stress to plane strain as its thickness increases. In general, plane stress deforma-tion is a ductile behavior and plane strain deformation is a brittle phenomenon. Prior art laminated film technology used fusion heating to bond oriented polypropylene films to form a solid block, thus its fracture mechanism became dominated by plane strain as the thickness of the film laminates increased.

The present invention coats core polymer film layers on at least one surface with heat fusible polymer layers, with which adjacent core layers are fusion bonded, thereby forming a bonded laminate in which each core film layer undergoes individual plane stress deformation rather than the plane strain deformation exhibited by monolithic polymer layers of equivalent thickness and by prior art film laminates. The laminates of the present invention exhibit plane stress deformation at thicknesses at which prior art laminates may exhibit plane strain defor-mation, which also prevents crack propagation from exceeding its critical stage. Moreover, the heat fusible film layers may undergo localized delamination (the interfacial bond energy is typically in the range of 7.8-155 J/cm² (50-1000 J/in²) during ballistic impact to dissipate additional energy. Consequently, the ballistic impact resistance of the film laminates of the present invention exceeds that of prior art film laminates.

The present invention is defined by the appended independent claims. Preferred embodiments of the invention are defined by the dependent claims.

The lamina-tion pressure is preferably between about 0.13 MPa (20psi) and about 21 MPa (3000 psi), and more preferably above about 1.4 MPa (200 psi). The flexural modulus is preferably greater than about 1379 MPa (200 000 psi), and more preferably greater than about 2758 MPa (400 000 psi) . Softening temperature is defined and measured according to ASTM D-1525.

The heat fusible coating layers are preferably less than one-fifth the thickness of the polymer core film layers. The core layer polymer has a melting point or softening tempera-ture between 100 and 350° C and the heat fusible coating layer polymer has a melting or softening point temperature between 65 and 265° C. For transparent ballistic protection applications, both types of film layers are preferably transparent and preferably form a bonded laminate that is also transparent.

For transparent laminates, the thinner, lower melting or softening point temperature heat-sealable polymer coating layers permit the use of lower lamination temperatures, which in turn results in the formation of bonded laminates with improved physical and optical properties. In particular, the low temperature bonded laminates of the present invention are lighter weight and less dense, less hazy and more transparent than prior art materials. The lower lamination temperature reduces yellowing, recrystallization and thickness variations to produce a less hazy and more transparent bonded laminate. The lower lamination temperature also prevents molecular polymer chain relaxation, thereby improving the impact resistance properties of the bonded laminate.

The present invention also includes surface-treated core polymer layers. Therefore, according to another aspect of the present invention, polymer films are provided, coated on at least one side with a heat fusible polymer coating, wherein the melting point or softening temperature of the heat fusible coating layer polymer is at least 5° C below the melting point or softening temperature of the coated polymer, the heat fusible coating layers are thinner than the coated polymer film lasers, and the coated polymer films prior to coating have a tensile strength above about 69 MPa (10000 psi) as measured by ASTM D-638 or a tensile modulus above 689 MPa (100 000 psi), as measured by ASTM D-638, or both. The tensile modulus is preferably above 1379 MPa (200 000psi).

The core polymer film layers and heat fusible coating layer films may be non-oriented, unidirectionally or biaxially oriented. Essentially any polymer capable of forming a unidirectionally or biaxially oriented film can be used. Polymers suitable for use as core polymer film layers include polyethylene, polypropylene and its copolymers, polyethylene terephthalate (PET) and its copolymers, polyacrylates, polystyrene, including polymethyl-methacrylate (PMMA), and their copolymers, cyclic olefin copolymers (COC), polyamides and their copolymers, polybutylene terephthalate (PBT), polycarbonates (PC), polyether-imides (PEI), polyethersulfones (PES), all of which having melting or softening point temperatures between 100 and 350° C.

Preferred heat fusible coating layer polymers include ethylene vinyl acetates (EVA), ethylene acrylic acid (EAA) copolymers, ethylene-methacrylic acid (EMA) copolymers, polymeric ionomers, polyethylenes, including low density polyethylene (LDPE), very low density polyethylenes (VLDPE), ultra low density polyethylenes (ULDPE) and polyethylene copolymerized with olefins such as butane, hexane or octene, polypropylene copolymers, including copolymers with olefin monomers, polyethylene terephthalate (PET) copolymers, amorphous polyesters, polyurethanes, copolyesters, polyvinyl butyral (PVB), polyacrylates, including thermal and UV curable acrylic resins, , all of which having melting or softening point temperatures between 65 and 265° C.

Oriented films are stretched as high as possible, in one direction for unidirectional films and in perpendicular directions for biaxially oriented films. Films stretched between about 2x and about 100x in one direction in unidirectional films and in both directions in biaxially oriented films are preferred.

Core polymer film layers have a thickness between 5 and 2,000 µm and preferably between 20 and 100 µm. Heat fusible coating layers should be as thin as possible, about one micron or less and no more than about one third of the core layer thickness. Heat fusible coating layers between about one and about twenty microns are preferred. Laminates according to the present invention preferably contain between 3 and 4,000 core polymer film layers. Bonded laminates according to the present inven-tion are between 0.1 and 10 cm thick.

In one embodiment of this aspect of the present invention, the laminates are formed from core polymer film layers consisting of the same polymer. In another embodiment of this aspect of the present invention, hybrid laminates are provided in which core polymer film layers of two or more different polymers are employed. One hybrid laminate according to this aspect of the present invention consists of core polymer film layers in which layers of different core polymers alternate within the laminate, so that no two adjacent core polymer film layers consist of the same polymer. Another hybrid laminate according to this aspect of the present invention consists of a plurality of sub-laminates, wherein each sub-laminate consists of a plurality of core polymer film layers of the same polymer and sub-laminates of different polymers alternate within the laminate, so that no two adjacent sub-laminates con-sist of the same polymer. In all embodiments, adjacent core polymer film layers of the same or different polymer are bonded together by heat fusible coating layers.

The bonded laminates of the present invention have a tensile strength at least 20% higher than the tensile strength of monolithic polycarbonate sheets or sheets of the same core layer polymer (fabricated by extrusion or injection molding) of equivalent thickness as measured by ASTM D-638. The bonded laminates also have at least a 20% higher flexural modulus compared to a monolithic sheet of polycarbonate or the same core layer polymer (fabricated by extrusion or injection molding) of equivalent thickness as measured by ASTM D-790. This provides an improvement in the V₅₀ ballistic performance of at least 10% in comparison to the V₅₀ ballistic performance of a monolithic sheet of polycar-bonate or the same core layer polymer of equivalent thickness.

The standard statistical V₅₀ ballistic limit identifies the average velocity at which a bullet or a fragment penetrates 50% of the tested material versus non-penetration in the remaining 50% of the material tested as defined in MIL-STD-662F. Preferred bonded lamin-ates possess at least a 10% improvement in V₅₀ ballistic performance compared to the V₅₀ performance of a monolithic sheet of polycarbonate or the same core layer polymer (fabricated by extrusion or injection molding) with either the same thickness or the same areal density (weight per unit area, typically shown as pounds per foot square or kilogram per meter square).

The bonded laminates of the present invention are formed by coating a heat fusible polymer layer to at least one surface of a core polymer film layer to form a surface treated core layer, assembling a plurality of surface treated core layers together, and applying heat and pressure to the assembled surface treated core layers to fusion bond the laminate layers and form a bonded laminate. Therefore, according to another aspect of the present invention, a method of forming bonded laminates according to the present invention is provided in which a heat fusible polymer layer is coated onto at least one surface of a core polymer film layer to form a surface treated core layer, and a plurality of such surface treated core layers are joined so that adjoining core polymer film layers have at least one heat fusible coating layer there-between. The surface treated core layers are then fusion bonded with heat and pressure so that molecular diffusion and/or polymer chain entanglement occurs at the heat fusible coating layer interfaces whereby the core layers or the heat fusible layers are bonded together with heat fusible layer coatings from adjacent film layers to form a bonded laminate. The heat fusible polymer coating layers are thinner than the core polymer film layers, the melting point or softening temperature of the heat fusible polymer is at least 5° C lower than said melting point or softening temperature of the core layer polymer, and the core polymer film prior to coating has a tensile strength above 69 MPa (10 000 psi) as measured by ASTM D-638 or a tensile modulus above 1379 MPa (200 000 psi), as measured by ASTM D-638, or both.

According to one embodiment of this aspect of the present invention, heat fusible coating layers are applied to both the top and bottom sides of each core polymer film layer. According to another embodiment of this aspect of the invention, the surface treated core layers are assembled by co-extrusion of the core polymer film layer and at least one heat fusible polymer layer as a coating thereon. The surface treated core layer extrudates are optionally either uni- or bi-axially oriented with heating following co-extrusion, and plural-ities of oriented or non-oriented co-extrudates are fusion bonded to form the bonded laminate of the present invention.

One co-extrudate according to the present invention combines compatible core polymer film layer and heat fusible coating layer polymers that adhere together during the co-extrusion process. Another co-extrudate according to the present invention combines incom-patible core layer and heat fusible coating layer polymers and requires the co-extrusion of an adhesive layer to coat the core polymer layer with at least one heat fusible polymer layer. Suitable adhesives for the adhesive layer shall be chemically or physically compatible with both the core layer polymer and the heat fusible coating layer polymer and may include polyacrylates, polyurethanes, ethylene-acrylic acid (EAA) copolymers, an ethylene-methacrylic acid (EMA) copolymers, acid or maleic anhydride modified polyethylene, acid or maleic anhydride modified polypropylene, or polymeric ionomers.

Accordingly, laminates according to the first aspect of the present invention further include embodiments in which the core polymer film layers and the heat fusible coating layers consist of incompatible polymers that are adhered together by an adhesive layer between the core polymer and the coating layer. Adhesive layer embodiments include laminates in which all core layers consist of the same polymer that is incompatible with the heat fusible coating layer polymer, which are adhered thereto with adhesive layers, and hybrid laminates in which one or more core polymer layers are incompatible with the heat fusible coating layer polymer and require an adhesive layer to adhere the incompatible polymer layers together.

According to another embodiment of the laminate-forming method aspect of the present invention, the surface treated core polymer layers are formed by coating at least one of the core polymer layers with a water-based or solvent-based solution of the heat fusible coating layer polymer or a precursor thereof. Prior to coating, the core polymer film layer may be optionally uni- or biaxially oriented with heating. The core layer polymer surface is preferably pretreated by corona discharge or other surface modification treatment, which is typically done subsequent to the film orientation process and prior to the coating process to modify the surface chemical structure and improve the adhesion between the core layer polymer and the heat fusible coating layer polymer. Plural layers of oriented or non-oriented core polymer layers coated with heat fusible polymer layers are then fusion bonded to form the bonded laminate of the present invention.

The heat fusible coating layers can be further UV cured to form a stronger bond after lamination by selecting heat fusible coating layer polymers with UV-curable functionality, such as UV curable polyacrylates or polyurethanes. Plural layers of oriented or non-oriented core polymer layers coated with UV-curable heat fusible polymer layers are then first fusion bonded under pressure and heat to form the bonded laminate and subsequently exposed to UV light to form a stronger interfacial bond between heat fusible layers.

The fusion bonding of core polymer layers that have been surface-treated with heat fusible polymer coatings or co-extrudates is performed by compression heating, wherein heat is applied at a temperature that is at least 5° C below the melting or softening point temperature of the core layer polymer and at or above the melting or softening point tempera-ture of the heat fusible layer polymer, and the bonding pressure is between 0,13 MPa (20 psi) and 21 MPa (3000 psi). Preferred laminate-forming methods reduce or eliminate surface electrostatic charges and remove dust from film surfaces prior to lamination to reduce haze. Electrostatic charges are removed by electric discharge to prevent dust accumulation on film surfaces. The accumulation of dust may also be prevented by performing the laminate-forming method under clean room conditions.

The present invention incorporates the discovery that the optical properties of trans-parent bonded laminates are affected by the uniformity of heating and cooling during the laminate consolidation process and the surface quality of the heated metal plates applying compression to the polymer layers. Therefore, according to another aspect of the present invention, a heated compression molding press is provided with opposing heated platens with a pair of steel plates on the laminate-contacting surfaces thereof wherein the steel plates are chambered for the uniform circulation of a heat exchanging fluid therethrough and the chambers are in communication with a heater and a chiller for the heat exchanging fluid to provide rapid and uniform heating and cooling of the steel plates, and the steel plates are polished to provide a surface uniformity with thickness variations less than 0,005 cm (0,002"). The heat exchanging fluid is preferably a heat exchanging oil.

The bonded laminates of the present invention can be thermally deformed, subsequen-tly or as part of the fusion bonding process, into impact-resistant shapes, including shapes useful as armor components, including polymeric laminates for ballistic protection or explo-sive blast barriers. Thus, according to another aspect of the present invention, a lightweight armor article is provided, formed from the laminate of the present invention. The article is preferably transparent and useful as protective eyewear and face shields, windows and vision blocks for armored vehicles, ballistic shield windows, goggles, aircraft transparen-cies and sensor windows, infrared domes for missiles, and laser ignition windows for medium and large caliber cannons. Commercial applications include law enforcement vehicle windows, ballistic shields, face shields, and executive protection armor configurations.

The bonded laminate of the present invention can be further laminated with other polymeric and/or non-polymeric sheets to further improve the ballistic impact-resistance for transparent and/or opaque armor applications, such as windows for combat vehicles, vehicle body armor, ballistic shields, and the like. Polymeric sheet materials include polymethyl-methacrylate (PMMA), polycarbonates (PC), polyetherimides (PEI), polyethersulfones (PES), thermoplastic or thermosetting polymeric composites (such as glass or carbon fiber reinforced epoxy), and the like. Non-polymeric sheet materials include glass (both annealed and heat treated), ceramics and metal (such as steel or aluminum).

The foregoing and other objects, features and advantages of the present invention are more readily apparent from the detailed description of the preferred embodiments set forth below, taken in conjunction with the accompanying drawings, wherein the thickness of polymer layers are drawn to illustrate the relationship between layers in the laminate and hence and not necessarily drawn to scale.

### BRIEF DESCRIPTION OF THE DRAWINGS

FIGS. 1A - 1D depict laminate layers according to four embodiments of the present invention;

FIGS. 2A and 2B depict hybrid laminates according to two embodiments of the present invention;

FIG. 3 depicts an automatic film cutting and stacking process according to the lamina-tion method of the present invention;

FIG. 4 depicts a prior art compression molding apparatus for film lamination; and

FIG. 5 depicts a compression molding apparatus for film lamination according to the present invention.

### DETAILED DESCRIPTION OF PREFERRED EMBODIMENTS

Advanced high performance impact-resistant polymeric film laminates are provided, with V₅₀ ballistic performance at least 10% greater than current state-of-the-art transparent armor materials, such as polycarbonates. The inventive laminates are prepared from high strength and/or high elastic modulus uni- or biaxially oriented polymer films with optimized surface fusible layers on at least one surface but preferably both surfaces.

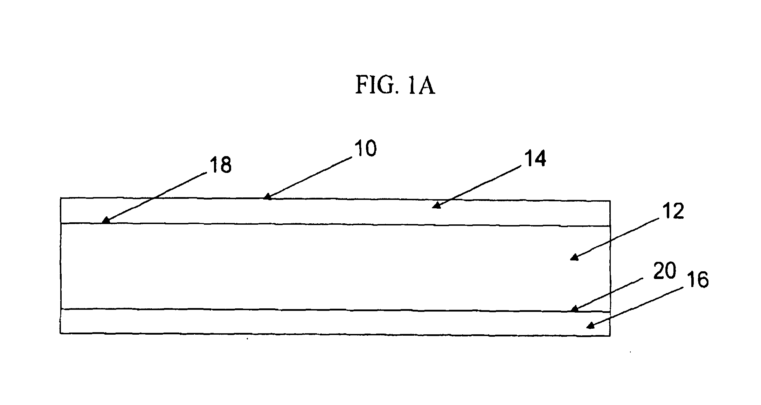

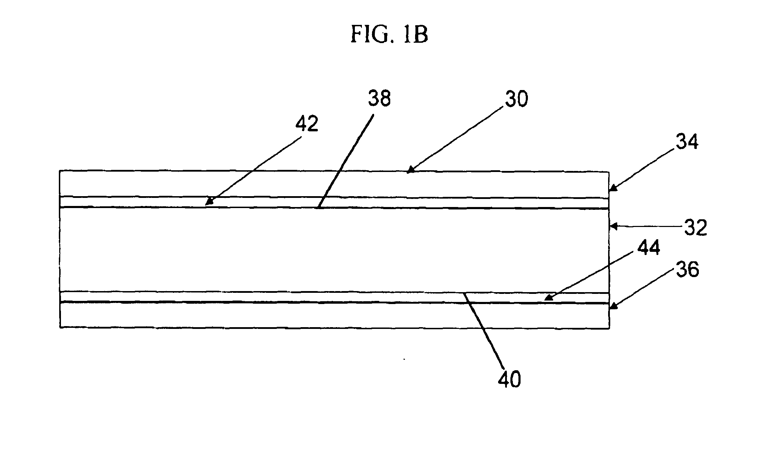

A laminate layer 10 according to the present invention is depicted in FIG. 1A. Core polymer film layer 12 has compatible heat fusible polymer coating layers 14 and 16 applied to respective top and bottom surfaces 18 and 20. In the embodiment depicted in FIG. 1B, laminate layer 30 consists of a core polymer film layer 32 that is incompatible with the heat fusible coating layers 34 and 36 on the respective top and bottom surfaces 38 and 40 thereof, and adhesive layers 42 and 44 secure heat respective fusible coating layers 34 and 36 to respective top and bottom surfaces 38 and 40 of core layer 32.

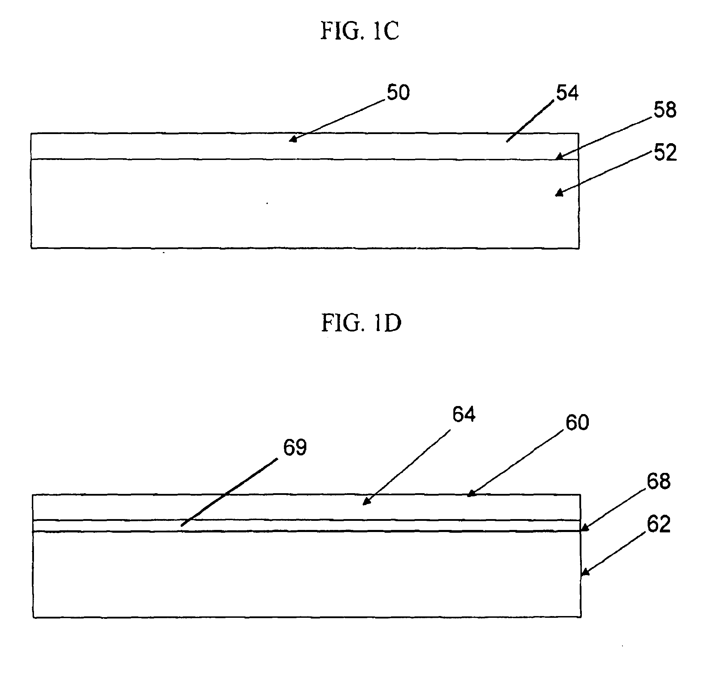

In the embodiments depicted in FIGS. 1C and 1D, a heat fusible coating layer is applied to only one surface of the core polymer layer. Laminate layer 50 of FIG. 1C has core polymer film layer 52 with compatible heat fusible coating layer 54 applied to the top surface 58 thereof. Laminate layer 60 of FIG. 1D has core polymer film layer 62 with incompatible heat fusible coating layer 64 secured to the top surface 68 thereof by adhesive layer 69.

The films may be non-oriented, unidirectionally oriented, or biaxially oriented. Unidirectionally and biaxially oriented films are preferred. Unidirectionally oriented films can be oriented in the either machine or transverse direction. The thickness of commercial available biaxially oriented (BO) core layer films can be as thin as 5 µm to as thick as 2,000 µm. Core layer films with thicknesses in the range of 25 to 100 µm are preferred for laminate armor applications.

The heat fusible coating layer polymers have a melting point or softening temperature at least 5° C lower, and preferably at least 10° C lower, than the core layer polymer melting point or softening temperature. Typically, the melting or softening point temperature of the heat fusible coating layer polymer is from 65 to 265° C compared to a melting or softening point temperature of between 100 and 350° C for the core layer poly-mer. Preferably, the melting point or softening temperature of the heat fusible coating layer polymer is 80 to 200° C compared to a melting or softening point temperature of between 130 and 260° C for the core layer polymer.

The thickness of the heat fusible coating layer is as thin as possible, from less than about one micron to no more than about one-third of the thickness of the core film layer. The heat fusible coating layer is preferably less than about one-fifth of the thickness of the core polymer film layer.

Essentially any polymer capable of being directionally oriented is suitable for use in the present invention. Examples of suitable core layer polymers include polyethylene, such as Hostalen® GD9555 from Basell Polyolefins, polypropylene, such as Moplen® from Basell Polyolefins, polypropylene copolymers, such as Moplen® HP520 from Basell Polyolefins, polyethylene terephthalates (PET) and its copolymers, such as Invista® 3301 from Invista, polyacrylates and their copolymers, including polymethylmethacrylates (PMMA), such as EG920 PMMA from LG Chemical, cyclic olefin copolymers (COC), such as Topas® 6013F-04 from Topas Advanced Polymers, polycarbonates (PC) and their copolymers, such as Makrolon® 1239 from Bayer Material Science, polyetherimides (PEI), such as Ultem® 8015 from SABIC Innovative Plastics, polyethersulfones (PES), such as Ultrason® L3010 from BASF, all of which have melting point temperatures between 100 and 350° C.

Suitable core layer polymers fall within at least one, and preferably more than one, of the following mechanical property ranges:
Tensile Strength, 13,8-124 MPa (2000-10000 psi)
Tensile Modulus, 689-3792 MPa (100 000-550 000 psi)

Suitable non-oriented or oriented core layer polymer films fall within at least one, and preferably more than one, of the following mechanical property ranges:
Tensile Strength MD, 69 MPa (10000psi)
Tensile Strength TD, 69 MPa (10000 psi)
Tensile Modulus MD, 1379MPa (200000psi)
Tensile Modulus TD, 1379 MPa (200000 psi)

Suitable unidirectionally oriented core polymer film layers would possess at least one, and preferably more than one, of the foregoing mechanical properties in the direction in which the film is oriented. All core layer polymer films preferably have a density between 0.90 and 1.80 g/cm³.

Laminates according to one embodiment of the present invention consist of plural layers of the same core polymer. According to another embodiment of the present invention, hybrid film laminates are provided in which core polymer film layers of two or more different polymers are employed. One hybrid film laminate according to this embodiment of the present invention consists of core polymer film layers in which core layers of different polymers alternate within the laminate (alternate film stacking), so that no two adjacent polymer film core layers consist of the same polymer.

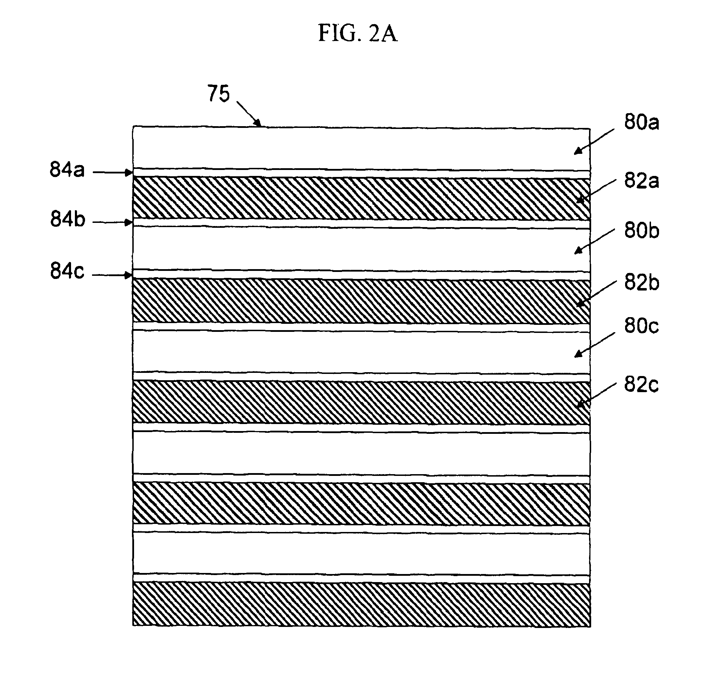

Such a laminate 75 is depicted in FIG. 2A, wherein core layers 80a, 80b, 80c, etc., of a first polymer alternate with core layers 82a, 82b, 82c, etc., of a second polymer. Heat fusi-ble coating layers on the top and bottom surface of each core polymer film layer form heat fusible layers 84a, 84b, 84c, etc., that bond the laminate together. Alternatively, the heat fusi-ble coating layers may be applied to only one surface of each core polymer film layer (not shown). If necessary, adhesive layers may be used to bond together incompatible film layers (not shown).

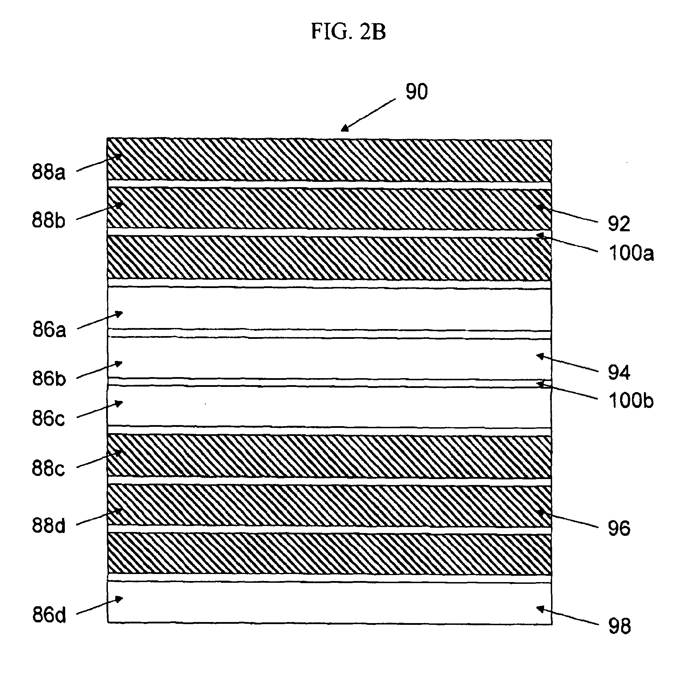

Another hybrid film laminate according to this aspect of the present invention consists of a plurality of sub-laminate blocks, wherein each sub-laminate block consists of a plurality of core polymer film layers of the same polymer and sub-laminate blocks of different polymers alternate within the laminate, so that no two adjacent sub-laminates consist of the same polymer (alternate block stacking). Such a laminate 90 is depicted in FIG. 2B, consist-ing of sub-laminate blocks 92, 94, 96, 98, etc. Sub-laminate blocks 92 and 96 consist of core layers 88a, 88b, 88c, 88d, etc., of the same first polymer and sub-laminate blocks 94 and 98 consist of core layers 86a, 86b, 86c, 86d, etc., of the same second polymer.

Heat fusible coating layers on the top and bottom surface of each core polymer film layer form heat fusible layers 100a, 100b, etc., that bond the sub-laminate block layers together and also join adjacent blocks together. Likewise, the heat fusible coating layers may be applied to only one surface of each core polymer film layer (not shown). If necessary, adhesive layers may be used to bond together incompatible layers (not shown). In all embodiments, adjacent core polymer film layers of the same or different polymer are bonded together by heat fusible coating layers.

Examples of hybrid film laminate polymer combinations include acrylic coated biaxially oriented polypropylene (BOPP) film in combination with acrylic coated biaxially oriented polyethylene terephthalate (BOPET) film, or BOPP film in combination with unidir-ectionally oriented polypropylene (UOPP) film. Both embodiments are surface co-extruded with polypropylene copolymer heat fusible film layers.

Laminates according to the present invention preferably contain between about 3 and 4,000 core polymer film layers. Bonded laminates according to the present invention are between 0.1 and 10 cm thick.

The present invention laminates core polymer film layers together, preferably uni-directionally or bi-axially oriented, using heat fusible polymer coating layers that have been applied to one or both core polymer layer surfaces. The heat fusible layer polymers are selected so lamination can occur at relatively low temperatures and the bonded laminate can retain a significant percentage of the mechanical properties of the oriented films, and attain high quality transparent bonded laminates, with excellent optical properties in transparent applications. The inventive process then fusion bonds from the core polymer films together under heat and pressure to achieve good quality bonded laminates.

The bonded laminates have a tensile strength at least 20% higher than the tensile strength of a monolithic sheet of polycarbonate or the same core layer polymer (fabricated by extrusion of injection molding) of equivalent thickness as measured by ASTM D-638. The bonded laminates also have at least a 20% higher flexural modulus compared to monolithic sheets of polycarbonate or the same core polymer (fabricated by extrusion of injection molding) of equivalent thickness as measured by ASTM D-790. In particular the bonded laminates of the present invention have a tensile strength greater than 69 MPa (10 000 psi) as measured by ASTM D-638, or a flexural modulus greater than 689 MPa (100 000 psi), preferably greater than 1379 MPa (200 000 psi), and more preferably greater than 2758 MPa (400 000psi), as measured by ASTM D-790, or both.

This provides an improvement in the V₅₀ ballistic performance of at least 10% in comparison to the V₅₀ ballistic performance of a monolithic sheet of polycarbonate or the same core layer polymer of equivalent thickness. One preferred bonded laminate possesses at least a 20% improvement in V₅₀ ballistic performance compared to the V₅₀ perform-ance of a comparable impact resistant article of the same thickness. Another preferred bonded laminates possesses at least a 20% improvement in V₅₀ ballistic performance compared to the V₅₀ performance of a comparable impact-resistant article of the same areal density.

The heat fusible polymer layers are coated onto the core polymer layer by either co-extrusion or solution coating. The basic co-extrusion and solution coating processes are essentially conventional and well known to those of ordinary skill in the lamination art, and require no detailed explanation. The present invention makes subtle process refinements to the lamination and fusion bonding steps that provide high quality impact-resistant articles with dramatic and unexpected improvements in optical and ballistic properties.

When co-extrusion is employed for laminates of unidirectionally and biaxially orient-ted films, axial orientation is performed after the core polymer film and heat fusible polymer layers are co-extruded together. When the heat fusible polymer layer is solution coated onto the core polymer layer, axial orientation, when employed, is performed prior to coating the core polymer layer with the heat fusible polymer layer. Corona discharge treatment or other surface modification treatment of the core polymer layer to improve adhesion is performed after axial orientation but prior to solution coating.

For either co-extruded or solution-coated embodiments, axial orientation is performed by conventional means using, for example, unidirectional drawing, blow film extrusion, sequential biaxial orientation, simultaneous longitudinal and transverse drawing, the double bubble process, and the like. Oriented films are stretched as high as possible, in one direction for unidirectional films and in both machine and transverse directions for biaxially oriented films. Films stretched between 2x and 100x in one direction in unidirectional films and in both directions in biaxially oriented films are preferred, with films stretched between 4x and 40x in either or both directions being more preferred.

Co-extrusion is an in-line process using multiple extruders to produce the multilayered film structures depicted in FIGS. 1A-1D. Heat fusible polymer layers applied by co-extrusion tend to be thicker. In general, the criteria for selecting heat fusible layer polymers for co-extrusion are as follows:

Heat fusible coating layer polymer should be chemically compatible with core layer polymers, for example, polyethylene (PE) and its copolymers, e.g., ethylene-vinyl acetate copolymers, ethylene acrylic acid copolymers, linear low density polyethylene, ultra low density polyethylene, polymeric ionomers, etc., such as Nucrel® 0609HSA ethylene meth-acrylic acid copolymer from Dupont and Polyethylene 1211G1 from Dow Chemical, are compatible with core polymer PE films and polypropylene copolymers such as Adsyl® 5C30F from Basell Polyolefins are compatible with core polymer PP films.

If there is no compatible heat fusible polymer available, an adhesive layer is used to bond the heat fusible polymer coating layers to the core polymer layer, as depicted in FIGS. 1B and 1D. Suitable adhesives used when the polymer film core layer and heat fusible film layers are incompatible include polyacrylates, polyurethane, ethylene-acrylic acid (EAA) copolymers, ethylene-methacrylate (EMA) copolymers, acid or maleic anhydride modified polyethylene, acid or maleic anhydride modified polypropylene, or polymeric ionomers, and the like. Adhesive layers, when present, have thicknesses from less than a micron up to 50 µm, and preferably have a thickness less than one-half of the thickness of the heat fusible layer.

The solution coating of the heat fusible polymer layers onto core polymer layers is an off-line process using a solvent or water based polymer or polymer precursor to coat a thin layer of lower melting point or softening temperature polymer onto the core polymer layer surfaces. The heat fusible polymer layers applied by solution coating processes tend to be thinner, typically from less than one micron to less than about one-quarter of the core layer thickness. The core polymer film surface is preferably pre-treated by corona discharge or other surface modification treatment technique prior to coating, which is typically done downstream of the film orientation process, if employed, and upstream of the solution coating process to modify the surface chemical structure and improve the adhesion between the core film resin and heat fusible resin coating thereon.

Two categories of heat fusible polymers are preferred for the coating process, acrylic resins and polyurethane resins. Amorphous polyester can also be solvent coated to some of the core films, such as polyethylene terephthalate (PET) film. The minimum fusion tempera-tures can be adjusted by conventional modification of the chemical structure of the resins, such as by adjusting the amount and type of co-monomer, e.g., butyl acrylate or octyl acrylate, in an acrylic resin, or the amount and type of the soft segment, e.g., polyester polyol or polyether polyol, in a polyurethane resin.

Polymer precursor coating processes according to the present invention include apply-ing a UV or thermally curable acrylic coating onto a core film. After a plurality of surface coated films are consolidated under heat and pressure to form the bonded laminate, the lami-nate is subsequently exposed to heat or UV radiation to form a cross-linked polymer network between two adjacent heat fusible layers to create a much stronger bond.

The UV cured coating layer can be very hard and highly scratch resistance. Such surfaces are preferably applied to the outermost core polymer layer of a film laminate to improve the scratch and abrasion resistance for transparent applications, such as eye wear or face shields, thereby extending service life.

Preferred polymer precursor coating processes according to the present invention apply a UV curable fusible acrylic or polyurethane resin onto oriented core film layers. A -cross-linked polymer network between two adjacent heat fusible layers is formed upon exposure of the bonded laminate to UV radiation.

For both co-extruded and solution-coated surface treatment of core polymer layers, the heat fusible coating layer polymer should have a softening or melting point temperature at least 5° C (and preferably at least 10° C) lower than the melting or softening point temperature of the core layer polymer.

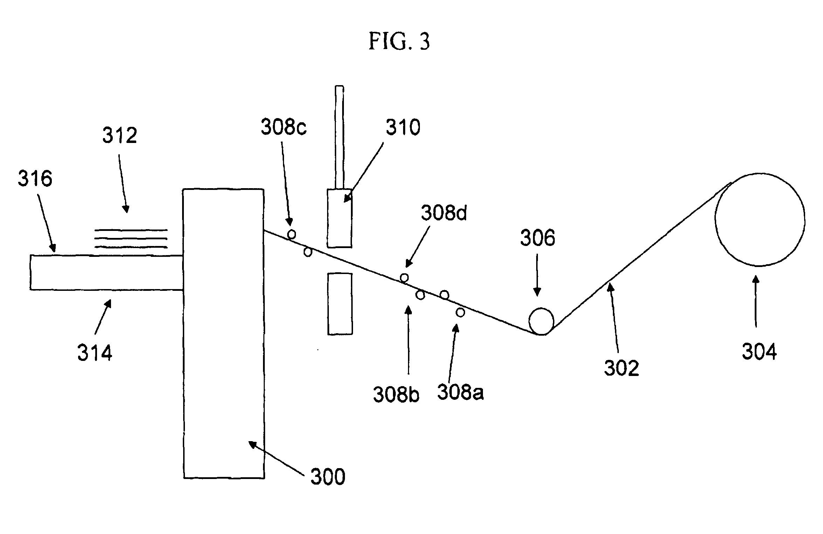

The fusion bonding of core polymer layers that have been surface-treated with heat fusible polymer solution-coatings or co-extrudates is performed by compression heating surface treated sheets formed and assembled, for example, by the process depicted in FIG. 3, wherein heat is applied at a temperature at least 5° C, and preferably at least 10°C, below the melting or softening point temperature of the core layer polymer and at or above the melting or softening point temperature of the heat fusible coating layer polymer. The bonding pressure is between 0,34 MPa (50 psi) and 21 MPa (3000 psi) and preferably above 1,4 MPa (200 psi). The laminate consolidation of the surface treated films can be done using conven-tional compression molding apparatuses such as Vantage Series Compression Molding Presses from Wabash MPI at Wabash, IN, equipped with heated steel platens between which heat and pressure is applied to fusion bond polymer film laminates. Vacuum can also be applied during consolidation under pressure and heat to improve the quality of the bonded laminate.

The process according to the present invention by which core polymer layers with heat fusible polymer layers solution-coated or co-extruded thereon are laminated and the laminate layers are then fusion bonded improves the impact-resistance ballistic properties of the laminates and the optical properties of transparent laminates over prior art laminates and monolithic polymer sheets. Included among the improvements in transparent laminates are the residual optical properties after ballistic impact, in which film layer delamination caused by impact is significantly reduced and even eliminated. The inventive process allows for the development of high performance transparent armors with consistent optical and ballistic performance.

One processing refinement incorporates the discovery that thickness uniformity and surface smoothness will affect the degree of light distortion and haze through the bonded laminate and accordingly provides smooth-surface laminate sheets up to 1.5 cm thick with less than 2% thickness variation across the laminate (less than 0.030 cm or 0.30 mm). The present invention accomplishes this through the use of polished steel plates in the compres-sion molding fusion bonding equipment.

To improve optical properties, the laminate surface quality and smoothness are critical. Even polished steel lamination platens that are far from perfectly mirror smooth significantly eliminate wavy laminate surfaces resulting from the use of commercially available steel laminate platens. To produce low haze and high light transmittance film laminates, the steel plates preferably have a mirror-like surface finish with the thickness variation less than 0,005 cm (0,002").

According to other processing refinements that provide improvements to optical performance in transparent laminates, heat and UV stabilizers are optionally added to film resin formulations to reduce and even eliminate the yellowing that would otherwise occur from heating during the film orientation process or from sun exposure, and crystallization suppression additives are optionally added to film resin formulations that form crystals upon heating to provide improvements to optical performance. When polymers crystallize upon heating, once the polymer crystal grows to a certain size, significant light scattering from the crystals will reduce the light transmission and increase haze.

The resin additives are incorporated by conventional means during the original film formation process. With these resin additives, used alone or in combination, the optical properties of the laminated films of the present invention are comparable to or better than optical properties of monolithic polycarbonate sheets.

To eliminate haze and light distortion caused by inclusions or dust, a clean room coupled with an electric discharging device can be employed to manage the film handling, cutting and stacking to prevent the contamination. Electrostatic charges on film surfaces not only attract dust and other contaminants but also make the film difficult to handle and may result in trapping air bubbles or causing film slippage. Thus, electrostatic charges on the film surface can significantly impact the optical properties of transparent film laminates. An automatic film cutting setup as shown in FIG. 3 assembled in a clean room will significantly reduce and even eliminate static charges on the film surfaces, thereby removing over 98% of contaminants and dust from film surfaces, eliminate manual film cutting and improve the quality of the film laminates.

FIG. 3 depicts an automatic film cutting device 300 in a clean room (not shown). Film web 302, consisting of a core polymer film co-extruded or coated with a heat fusible polymer layer, is unwound from roll 304 under guide roll 306. The web passes between electric discharge rods 308a, 308b, 308c, etc., with which electrostatic charges on the film are removed. The web then passes under vacuum 310, which removes dust and other contami-nants, after which the automatic film cutter 300 cuts the film web into sheets corresponding to the dimensions of the steel plates on the compression molding equipment to be employed.

The cut film sheets are formed into a stack 312 on a table 314 with grounded steel surface 316 until the number of sheets stacked equal the number of layers to be provided in the bonded laminate. The stack 312 is placed between steel plates and then positioned between the platens of a compression molding device, preferably in the clean room, and fusion bonded to form a bonded laminate. This process refinement further reduces haze, and bonded laminate clarity and transparency are further improved.

Another processing refinement incorporates the discovery that, during the fusion bonding process, laminate cooling rates are much slower than the corresponding heating rates. Insufficient cooling of bonded laminates prior to removing from the compression mold-ing machine results in warped and distorted bonded laminates. Consequently the bonded laminates should not be removed from the compression molding machine until the bonded laminate temperature is below 50°C.

Variations in bonded laminate properties at different locations on the laminate surface are attributable to non-uniformity of heating and cooling temperatures across the laminate surface during fusion bonding. Most compression molding machines use cartridge heaters to heat the platens and use a combination of air and/or water to cool the platens. The cartridge heater is low cost and easy to install, but fails to achieve temperature uniformity throughout the platens. Additionally, conventional compression molding machines often have insufficient number of water lines to cool the platen, thus the cooling rate is slow.

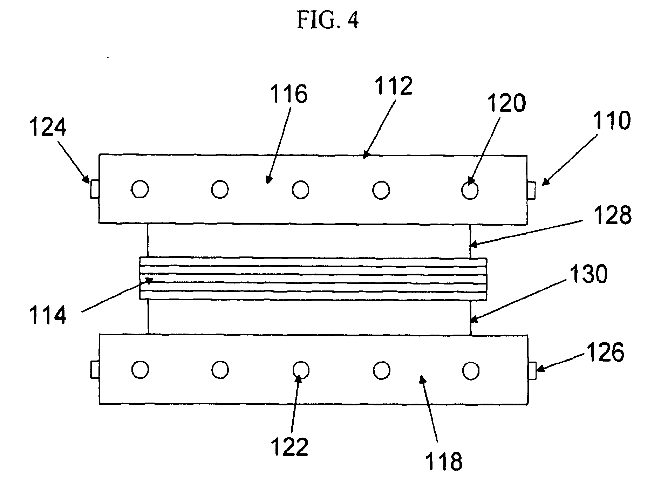

FIG. 4 depicts the heating and cooling system 112 of a prior art compression molding apparatus 110 bonding film stack 114. Steel platens 116 and 118 with respective electrical heating elements 120 and 122 are cooled by respective water lines 124 and 126. Heating element 120 on the upper steel platen 116 serves to heat steel plate 128 and the cooling of upper steel platen 116 by water line 124 serves to cool steel plate 128. Likewise, heating element 122 on the lower steel platen 118 serves to heat steel plate 130 and the cooling of lower steel platen 118 by water line 126 serves to cool steel plate 130.

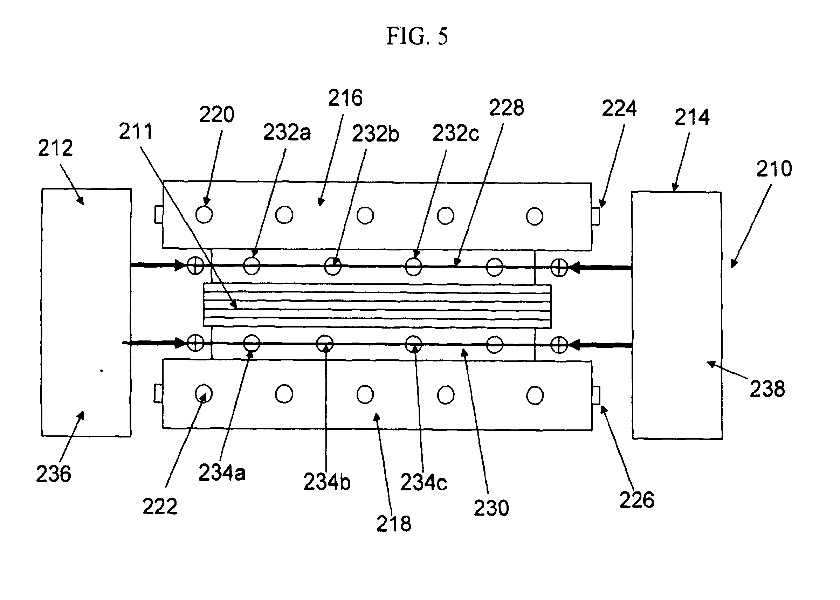

To improve the heating and cooling rates and temperature uniformity, a compression molding apparatus is provided using oil heating through an oil heater and oil cooling using a chiller to increase both the heating rate and cooling rate and reduce the production cycle time. The cycle time for producing 3.175 mm (0.125 inch) laminates can be reduced from 60 minutes using the device depicted in FIG. 4 down to less than 40 minutes by using the FIG. 5 compression molding apparatus of the present invention. More importantly, the temperature control will be more accurate, and the temperature uniformity on the steel platens will be much improved, thus the quality and performance of the bonded film laminates will be significantly better.

FIG. 5 depicts the heating 212 and cooling 214 systems of a compression molding apparatus 210 according to the present invention bonding film stack 211. Heat is still suppli-ed to steel plates 228 and 230 by respective steel platens 216 and 218 with electrical heating elements 220 and 222. Steel platens 216 and 228 are still cooled by respective water lines 224 and 226. However, chambers 232a, 232b, 232c, etc., in steel plate 228 and chambers 234a, 234b, etc., circulate a heat exchanging fluid, typically an oil (not shown). The chambers are in communication with a heater 236 and a chiller 238 with which the temperature of the heat exchanging fluid is controlled, providing more accurate temperature control and more uniform heat distribution within the steel plates.

The bonded laminates of the present invention can be thermally deformed, subse-quently or as part of the fusion bonding process, into simple shapes for use as lightweight, impact-resistant articles including articles useful as protective armor, such as polymeric laminates for ballistic protection or explosive blast barriers. Suitable for opaque armor applications include vehicle or aircraft armor and ballistic shield applications, such as ballistic panels for portable shelters. Transparent laminates can be formed into impact-resistant articles for transparent armor applications such as protective eyewear and face shields, windows and vision blocks for armored vehicles, ballistic shield windows, goggles, aircraft transparencies and sensor windows, infrared domes for missiles, and laser ignition windows for medium and large caliber cannons.

Commercial applications include law enforcement vehicle windows, ballistic shields, including as replacements for the ballistic shields currently employed in banks and other commercial enterprises, and executive protection armor configurations. The means by which bonded laminate sheets may be thermally formed into useful articles is essentially conven-tional to one of ordinary skill in the thermoforming art and requires no further description.

The bonded laminates of the present invention can be further laminated with other polymeric and/or non-polymeric sheets or plates to further enhance impact resistance for opaque armor applications, such as vehicle or aircraft armor, or ballistic shield applications, such as ballistic panels for portable shelters. Polymeric sheet materials include polymethyl-methacrylate (PMMA), polycarbonates (PC), polyetherimides (PEI), polyethersulfones (PES), thermoplastic or thermosetting polymeric composites (such as glass or carbon fiber reinforced epoxy composites), and the like. Non-polymeric sheet materials include glass (both annealed and heat treated), ceramics and metal (such as high strength steel or aluminum).

The bonded laminates in this invention have much higher mechanical properties than those of monolithic sheets of the same core polymer made by conventional techniques (such as extrusion or injection molding), and thus can also be used, with or without further forming, in structural or semi-structural applications, such as impact-resistant panels or other articles in the construction and automotive industries. The present invention thus includes impact-resistant automotive parts formed from the opaque and transparent laminates of the present invention, as well as impact-resistant industrial, structural, semi-structural or decorative panels or other articles formed from the opaque of transparent laminates of the present invention.

### EXAMPLES

### Materials:

Control 1: Extruded polycarbonate (PC) sheet, Manufacturer: Sheffield Plastics, Trade name: Makrolon^{®} GP.

Control 2: Polypropylene Homopolymer, Manufacturer: Basell, Trade and grade name: Hifax® AA36H.

Control 3 & Control 4: Information related to control 3 and control 4 was obtained from the publication "The Effects of PMMA on Ballistic Impact Performance of Hybrid Hard/Ductile All-Plastic- and Glass-Plastic-Based Composites" by Alex J. Hsieh, Daniel DeSchepper, Paul Moy, Peter G. Dehmer, and John W. Song, Army Research Laboratory (ARL) report number: ARL-TR-3155, 2004.

BOPP-A film: Biaxially oriented polypropylene (BOPP) film with fusible layers on both sides. Manufacturer: Innovia Films, Trade and grade name: Propafilm^{®} RC-160, Core layer resin: polypropylene, Surface Fusible Resin: coated acrylic resin, Total film thickness: 40 microns.

BOPP-B film: Biaxially oriented polypropylene (BOPP) film with fusible layers on both sides. Manufacturer: Interplast Group, Trade and grade name: AmTopp^{®} BB035T, Core layer resin: polypropylene, Surface Fusible Resin: PP copolymer, Thickness: 35 µm.

BOPET-A film: Biaxially oriented polyethylene terephthalate (PET) film with fusible layers on both sides. Manufacturer: Mitsubishi Polyester Film, Trade and grade name: Hostaphan^{®} 4507, Core layer resin: polyethylene terephthalate, Surface Fusible Resin: coated acrylic resin, Thickness: 50 µm.

BOPET-B film: Biaxially oriented polyethylene terephthalate (PET) film with fusible layers on both sides. Manufacturer Toray Plastics, Trade and grade name: Lumirror^{®} PA-30, Core layer resin: polyethylene terephthalate, Surface Fusible Resin: proprietary polyethylene terephthalate copolymer, Thickness: 31 µm.

BOPET-C film: Biaxially oriented polypropylene film with fusible layers on both sides. Manufacturer: DuPont Teijin Films, Trade and grade name: Melinex^{®} 342, Core layer resin: polyethylene terephthalate, Surface Fusible Resin: proprietary polyethylene terephthalate copolymer, Thickness: 100 µm.

Example A1: This bonded BOPP-B laminate was prepared from 93 layers of biaxially oriented BOPP-B films with fusible layers on both sides using a Wabash compression molding machine at 125°C and 6,9 MPa (1000psi) for 20 minutes. The bonded laminate was removed from the press after another 30 minutes of cooling cycle. The resulted bonded BOPP-B laminate had a thickness of 3.18mm.

Example A2: This bonded BOPP-B laminate was prepared from 180 layers of biaxially oriented BOPP-B films with fusible layers on both sides using a Wabash compression molding machine at 125°C and 6,9 MPa (1000psi) for 30 minutes. The bonded laminate was removed from the press after another 30 minutes of cooling cycle. The resulted bonded BOPP-B laminate had a thickness of 6.35mm.

Example A3: This bonded BOPET-A laminate was prepared from 64 layers of biaxially oriented BOPET-A films with fusible layers on both sides using a Wabash compression molding machine at 145°C and 6,9 MPa (1000psi) for 20 minutes. The bonded laminate was removed from the press after another 35 minutes of cooling cycle. The resulted bonded BOPET-A laminate had a thickness of 3.18mm.

Example A4: This bonded BOPET-C laminate was prepared from 64 layers of biaxially oriented BOPET-C films with fusible layers on both sides using a Wabash compression molding machine at 125°C and 6,9 MPa (1000psi) for 30 minutes. The bonded laminate was removed from the press after another 30 minutes of cooling cycle. The resulted bonded BOPET-C laminate had a thickness of 6.35 mm.

Tensile Testing: Tensile test specimens were cut from the bonded laminate using a sharp-edged ASTM Type I die. The die was placed over the laminate and placed between the platens of the Wabash compression press under 5,2 MPa (755 psi) of pressure to cut the laminate into ASTM Type I tensile test specimens. A Shimadzu AG-I universal test machine was used in conjunction with an Epsilon Extensometer (Model 3542-0100-100 LHT) to determine tensile properties of the bonded laminates in accordance with the ASTM D-638 method.

Flexural Testing: Flexural test specimens with a nominal length of 165.1 mm (6.5 in) and a width of 12.7 mm (0.5 in) were cut from the bonded laminates using a band saw. A Shimadzu AG-I universal test machine was used to measure the flexural properties of the bonded laminates in accordance with the ASTM D-790 method.

Example B1: A 12.7mm thick BOPP-B bonded laminate was prepared from 371 layers of biaxially-oriented BOPP-B films compression molded using a Wabash Molding Machine at 125°C and 6.9 MPa (1000 psi) for 20 minutes and another 30 minute cooling time were used to form bonded laminate.

Example B2: A 12.7 mm thick BOPET-B bonded laminate was prepared from 410 layers of biaxially-oriented BOPET-B films compression molded using a Wabash Molding Machine at 135°C and 6.9 MPa (1000 psi) for 30 minutes and another 30 minute cooling time were used to form the bonded laminate.

Example C1: A 9.7 mm thick BOPP-B bonded laminate was prepared from 284 layers of biaxially-oriented BOPP-B films compression molded using a Wabash Molding Machine at 125°C and 4,8 MPa (700 psi) for 30 minutes and another 30 minute cooling time were used to form bonded laminate. This bonded laminate was subsequently bonded with a 3.0 mm cast polymethylmethacrylate sheet (Acrylite® GP cast PMMA from CYRO Industrial) using Silicone-II adhesive from GE. The thickness of the silicone adhesive was 1.2 mm.

Example C2: An 8.2 mm thick BOPP-B bonded laminate was prepared from 240 layers of biaxially-oriented BOPP-B films compression molded using a Wabash Molding Machine at 125°C and 4.8 MPa (700 psi) for 30 minutes and another 30 minute cooling time were used to form the bonded laminate. This bonded laminate was subsequently bonded with a 4.5 mm cast polymethylmethacrylate sheet (Acrylite® GP cast PMMA from CYRO Industrial) using Silicone-II adhesive from GE. The thickness of the silicone adhesive was 1.2 mm.

Example C3: A 6.7 mm thick BOPP-B bonded laminate was prepared from 196 layers of biaxially oriented BOPP-B films compression molded using a Wabash Molding Machine at 125° C and 4.8 MPa (700 psi) for 30 minutes and another 30 minute cooling time were used to form the bonded laminate. This bonded laminate was subsequently bonded with a 6.0 mm cast polymethylmethacrylate sheet (Acrylite® GP cast PMMA from CYRO Industrial) using Silicone-II adhesive from GE. The thickness of the silicone adhesive was 1.2 mm.

Example C4: A 3.2 mm thick BOPP-B bonded laminate was prepared from 93 layers of biaxially-oriented BOPP-B films compression molded using a Wabash Molding Machine at 125° C and 4.8 MPa (700 psi) for 30 minutes and another 30 minute cooling time were used to form bonded laminate. This bonded laminate was subsequently bonded with a 9.5 mm cast polymethylmethacrylate sheet (Acrylate® GP cast PMMA from CYRO Industrial) using Silicone-II adhesive from GE. The thickness of the silicone adhesive was 1.2 mm.

V₅₀ FSP Test: The .22 caliber, 17 grains fragment simulating projectiles (FSP) as specified in MIL-P-46593A were shot from a .223 caliber center fired Thompson Contender rifle into the clamped 10.1 x 10.1 cm (4" x 4") samples. The standard statistical V₅₀ ballistic limit identifies the average velocity at which a bullet or a fragment penetrates 50% of the tested material versus non-penetration in the remaining 50% of the material tested as defined in MIL-STD-662F.

| | Control 1 * | Control 2 ** | Ex. A 1 | Ex. A2 | Ex. A3 | Ex. A4 |
|---|---|---|---|---|---|---|
| Polymer or Core Layer Polymer | PC | PP | BOPP-B | BOPP-B | BOPET-A | BOPET-C |
| Laminate Thickness (mm) | - | - | 3.18 | 6.35 | 3.18 | 6.35 |
| Tensile Strength | (9.000 psi) 60 MPa | (4,640 psi) 32 MPa | (15,518 psi) 107 MPa | - | (19,286 psi) 133 MPa | - |
| Tensile Modulus | (345,000 psi) 2379 MPa | - | 371,987 psi) 2565 MPa | - | (747,917 psi) 5157 MPa | - |
| Flexural Modulus | (345,000 psi) 2379 MPa | (203,000 psi) 1400 MPa | - | (474,468 psi) 3271 MPa | - | (850,837 psi) 5866 MPa |

Mechanical properties of Control 1 were obtained from the supplier datasheet of Makrolon GP polycarbonate (PC) sheet, Sheffield Plastics.

** Mechanical properties of Control 2 were obtained from the supplier datasheet of polypropylene (PP) of Hifax AA36H, Basell.

| | Control 3** | Ex. B1 | Ex. B2 |
|---|---|---|---|
| Polymer or Core Layer Polymer Type | PC | BOPP-B | BOPET-B |
| Thickness (mm) | 12.9 | 12.7 | 12.7 |
| Areal Density (Kg/m²) | 15.24 | 11.46 | 16.76 |
| V₅₀* (m/s) | 400 | 460 | 520 |

*V₅₀ was determined using .22 caliber 17 grains Fragment Simulated Projectiles (FSP).

** Data for Control 3 was obtained from Army Research Laboratory's report number: ARL-TR-3155, 2004.

| | PMMA Layer Thickness (mm) | BOPP-B Laminate Thickness (nun) | Hybrid Laminate Total Thickness (mm) | Areal Density (Kg/m²) | V₅₀* (m/s) |
|---|---|---|---|---|---|
| Ex.B1 | 0 | 12.7 | 12.7 | 11.46 | 460 |
| Ex.C1 | 3.0 | 9.7 | 12.7 | 12.32 | 517 |
| Ex. C2 | 4.5 | 8.2 | 12.7 | 12.75 | 528 |
| Ex. C3 | 6.0 | 6.7 | 12.7 | 13.18 | 508 |
| Ex. C4 | 9.5 | 3.2 | 12.7 | 14.19 | 523 |
| Control 4** | 11.7 | 0 | 12.0 | 14.28 | 395 |

* V₅₀ was determined using .22 caliber 17 grains Fragment Simulated Projectiles (FSP). V₅₀ was also determined using the PMMA component as the striking face of the hybrid laminates.

** Data from Control 4 was obtained from Army Research Laboratory's report number: ARL-TR-3155,2004.

The forgoing demonstrates the improvements in impact resistance and ballistic performance obtained by the laminates of the present invention.

The description of the preferred embodiments should be taken as illustrating, rather than as limiting, the present invention as defined by the claims. As will be readily appreciated, numerous combinations of the features set forth above can be utilized without departing from the present invention as set forth in the claims.

## Claims

1. A bonded polymeric film laminate comprising core polymer film layers individually coated on at least one side with a heat fusible polymer layer and fusion bonded together by the application of heat and pressure at a temperature at which each heat fusible polymer coating bonds together adjacent core polymer film layers but which is at least 5° C below the melting point or softening temperature of said core layer polymer and at or above the melting point or softening temperature of said heat fusible coating polymer, wherein said heat fusible polymer coating layers are thinner than said core polymer film layers, said melting point or softening temperature of said heat fusible polymer is at least 5° C lower than said melting point or softening temperature of said core layer polymer,
**characterized in that**
said core polymer film layers are biaxially oriented and stretched between 2x and 100x in both directions, or unidirectionally oriented and stretched between 2x and 100x in the oriented direction,
and said laminate has a tensile strength greater than 68947570 Pa (10,000 psi) as measured by ASTM D-638, or a flexural modulus greater than 68947570 Pa (10.000 psi) as measured by ASTM D-790, or both.

2. The laminate of claim 1, wherein said core layer polymer has a melting point or softening temperature between 100 and 350° C and said heat fusible coating polymer preferably has a melting point or softening temperature between 65 and 265° C.

3. The laminate of claim 1, wherein said polymer film core layer polymer is selected from the group consisting of polyethylene, polypropylene, polystyrene, poly-propylene copolymers, polyethylene terephthalate (PET), PET copolymers, polyacrylates, polyacrylate copolymers, cyclic olefin copolymers (COC), polyamides, polyamide co-polymers, polybutylene terephthalate (PBT), polycarbonates (PC), polyetherimides (PEI) and polyethersulfones (PES) with melting or softening point temperatures between 100 and 350° C, or said heat fusible coating layer polymer is selected from the group consisting of ethylene vinyl acetates (EVA), polymeric ionomers, polyethylenes, polyethylene copolymerized with olefins, amorphous polyesters, ethylene-acrylic acid (EAA) copolymers, ethylene-methacrylic acid (EMA) copolymers, polypropylene co-polymers with olefin monomers, polyethylene terephthalate copolymers, polyurethanes, copolyesters, polyvinyl butyral (PVB), polyacrylates and polymethacrylates.

4. The laminate of claim 1, wherein said core polymer film layers have a thickness between 5 and 2,000 µm and said laminate is between 0.1 and 10 cm thick with 4,000 core polymer film layers.

5. The laminate of claim 1, comprising core polymer film layers of two or more different polymers

6. The laminate of claim 5, comprising layers of different core polymers alternating within said laminate, so that no two adjacent core polymer film layers consist of the same polymer.

7. The laminate of claim 5, comprising a plurality of sub-laminates, wherein each sub-laminate consists of a plurality of core polymer film layers of the same polymer and sub-laminates of different polymers alternate within said laminate, so that no two adjacent sub-laminates consist of the same polymer.

8. The laminate of claim 1, wherein said core polymer film layers and said heat fusible coating layers consist of incompatible polymers that are adhered together by an adhesive layer between the two polymer layers, and said adhesive layer comprises a poly-acrylate, a polyurethane, an ethylene-acrylic acid (EAA) copolymer, an ethylene-methacrylic acid (EMA) copolymer, an acid or maleic anhydride modified polyethylene, an acid or maleic anhydride modified polypropylene, or a polymeric ionomer.

9. The laminate of claim 1, **characterized by** being further laminated with other polymeric and/or non-polymeric sheet materials to further improve ballistic impact-resistance wherein said polymeric sheet materials are selected from the group consisting of polymethyl-methacrylate (PMMA), polycarbonates (PC), polyetherimides (PEI), polyethersulfones (PES) and thermoplastic and thermosetting polymeric composite sheet materials, and said non-polymeric sheet materials are selected from the group consisting of annealed and heat treated glass, ceramics and metal sheet materials.

10. An impact-resistant article formed from the laminate of claim 1.

11. The impact-resistant article of claim 10, wherein said article is an automotive part, polymeric laminate for ballistic protection or an explosive blast barrier.

12. The impact-resistant article of claim 10, wherein said article is transparent.

13. The impact-resistant article of claim 11, wherein said article is a vehicle body armor panel, a personnel armor system, or a ballistic shield.

14. The impact-resistant article of claim 11, wherein said article is transparent and comprises protective eyewear, a face shield, a window or a vision block for a combat vehicle or an armored vehicle, a ballistic shield window, an aircraft transparency, a sensor window, an infrared dome for a missile, a laser ignition windows for medium and large caliber cannons, a law enforcement vehicle window or armor for executive protection.

## Patentansprüche

1. Laminat aus gebundenen Polymerfolien, Polymerfolien-Kernschichten umfassend, die einzeln auf mindestens einer Seite mit einer durch Wärme verschmelzbaren Polymerschicht beschichtet sind und durch die Anwendung von Wärme und Druck durch Schmelzen aneinander gebunden sind, bei einer Temperatur, bei der jede durch Wärme verschmelzbare Polymerbeschichtung benachbarte Polymerfolien-Kernschichten aneinander bindet, die aber mindestens 5 °C unter dem Schmelzpunkt oder der Erweichungstemperatur des Kernschichtpolymers und bei oder über dem Schmelzpunkt oder der Erweichungstemperatur des durch Wärme verschmelzbaren Beschichtungspolymers liegt, wobei die durch Wärme verschmelzbaren Polymerbeschichtungen dünner als die Polymerfolien-Kernschichten sind und der Schmelzpunkt oder die Erweichungstemperatur des durch Wärme verschmelzbaren Polymers mindestens 5 °C niedriger ist als der Schmelzpunkt oder die Erweichungstemperatur des Kernschichtpolymers,
**dadurch gekennzeichnet, dass**
die Polymerfolien-Kernschichten biaxial ausgerichtet und zwischen 2x und 100x in beide Richtungen gestreckt sind oder in eine Richtung ausgerichtet und zwischen 2x und 100x in der Ausrichtungsrichtung gestreckt sind,
und das Laminat eine gemäß ASTM D-638 gemessene Zugfestigkeit von mehr als 68947570 Pa (10.000 psi) aufweist oder einen gemäß ASTM D-790 gemessenen Biegemodul von mehr als 68947570 Pa (10.000 psi) oder beides.

2. Laminat nach Anspruch 1, wobei das Kernschichtpolymer einen Schmelzpunkt oder eine Erweichungstemperatur zwischen 100 und 350 °C aufweist und das durch Wärme verschmelzbare Beschichtungspolymer vorzugsweise einen Schmelzpunkt oder eine Erweichungstemperatur zwischen 65 und 265 °C aufweist.

3. Laminat nach Anspruch 1, wobei das Polymer der Polymerfolien-Kernschicht aus der Gruppe ausgewählt ist, die besteht aus: Polyethylen, Polypropylen, Polystyrol, Polypropylen-Copolymeren, Polyethylenterephthalat (PET), PET-Copolymeren, Polyacrylaten, Polyacrylat-Copolymeren, Cyclo-Olefin-Copolymeren (COC), Polyamiden, Polyamid-Copolymeren, Polybutylenterephthalaten (PBT), Polycarbonaten (PC), Polyetherimiden (PEI) und Polyethersulfonen (PES) mit einem Schmelzpunkt oder einer Erweichungstemperatur zwischen 100 and 350 °C, oder das durch Wärme verschmelzbare Beschichtungspolymer aus der Gruppe ausgewählt ist, die besteht aus: Ethylenvinylacetaten (EVA), Polymer-Ionomeren, Polyethylenen, mit Olefinen copolymerisiertem Polyethylen, amorphen Polyestern, Ethylen-Acrylsäure(EAA)-Copolymeren, Ethylen-Methacrylsäure(EMA)-Copolymeren, Polypropylen-Copolymeren mit Olefinmonomeren, Polyethylenterephthalat-Copolymeren, Polyurethanen, Copolyestern, Polyvinylbutyral (PVB), Polyacrylaten und Polymethacrylaten.

4. Laminat nach Anspruch 1, wobei die Polymerfolien-Kernschichten eine Dicke zwischen 5 und 2.000 µm aufweisen und das Laminat mit 4.000 Polymerfolien-Kernschichten zwischen 0,1 und 10 cm dick ist.

5. Laminat nach Anspruch 1, Polymerfolien-Kernschichten aus zwei oder mehr verschiedenen Polymeren umfassend.

6. Laminat nach Anspruch 5, Schichten aus verschiedenen Kernpolymeren umfassend, die sich im Laminat abwechseln, so dass keine zwei benachbarten Polymerfolien-Kernschichten aus dem gleichen Polymer bestehen.

7. Laminat nach Anspruch 5, mehrere Unterlaminate umfassend, wobei jedes Unterlaminat aus mehreren Polymerfolien-Kernschichten des gleichen Polymers besteht und Unterlaminate aus verschiedenen Polymeren einander im Laminat abwechseln, so dass keine zwei benachbarten Unterlaminate aus dem gleichen Polymer bestehen.

8. Laminat nach Anspruch 1, wobei die Polymerfolien-Kernschichten und die durch Wärme verschmelzbaren Beschichtungen aus nicht kompatiblen Polymeren bestehen, die durch eine Klebstoffschicht zwischen den zwei Polymerschichten aneinander befestigt werden, und die Klebstoffschicht ein Polyacrylat, ein Polyurethan, ein Ethylen-Acrylsäure(EAA)-Copolymer, ein Ethylen-Methacrylsäure(EMA)-Copolymer, ein säure- oder maleinsäureanhydridmodifiziertes Polyethylen, ein säure- oder maleinsäureanhydridmodifiziertes Polyproppylen oder ein Polymer-Ionomer umfasst.

9. Laminat nach Anspruch 1, **dadurch gekennzeichnet, dass** es weiterhin mit anderen polymeren und/oder nicht-polymeren Bahnmaterialien laminiert ist, um die ballistische Schlagfestigkeit weiter zu verbessern, wobei die polymeren Bahnmaterialien aus der Gruppe ausgewählt sind, die aus Polymethylmethacrylat (PMMA), Polycarbonaten (PC), Polyetherimiden (PEI), Polyethersulfonen (PES) und thermoplastischen und wärmehärtenden polymeren Verbundbahnmaterialien besteht, und die nicht-polymeren Bahnmaterialien aus der Gruppe ausgewählt sind, die aus teilvorgespanntem und wärmebehandeltem Glas, Keramiken und Metallblechmaterialien besteht.

10. Schlagfester Gegenstand, der aus dem Laminat nach Anspruch 1 gebildet ist.

11. Schlagfester Gegenstand nach Anspruch 10, wobei der Gegenstand ein Fahrzeugteil, ein Polymerlaminat für ballistischen Schutz oder ein Explosionsdruckwellenschutz ist.

12. Schlagfester Gegenstand nach Anspruch 10, wobei der Gegenstand transparent ist.

13. Schlagfester Gegenstand nach Anspruch 11, wobei der Gegenstand eine Fahrzeugaufbau-Armierungsplatte, ein Personenarmierungssystem oder ein ballistischer Schutzschild ist.

14. Schlagfester Gegenstand nach Anspruch 11, wobei der Gegenstand transparent ist und eine Schutzbrille, ein Gesichtsschild, ein Fenster oder ein Periskop für ein Gefechtsfahrzeug oder ein gepanzertes Fahrzeug, ein ballistisches Schutzfenster, ein Flugzeugfenster, ein Sensorfenster, eine Infrarotkuppel für Lenkwaffen, ein Laserzündungsfenster für mittel- und kleinkalibrige Geschütze, ein Fenster für ein Fahrzeug der Ordnungskräfte oder eine Armierung für den Personenschutz ist.

## Revendications

1. Film stratifié polymère lié comprenant des couches de film polymère de coeur individuellement enduites sur au moins un côté avec une couche de polymère thermofusible et liées ensemble par fusion par l'application à la fois de chaleur et d'une pression à une température à laquelle chaque revêtement de polymère thermofusible se lie avec les couches de film polymère de coeur adjacentes, mais qui est au moins 5 °C au-dessous du point de fusion ou du point de ramollissement dudit polymère des couches de coeur et à ou au-dessus du point de fusion ou du point de ramollissement dudit polymère de revêtement thermofusible, dans lequel lesdites couches de revêtement de polymère thermofusible sont plus fines que lesdites couches de film polymère de coeur, ledit point de fusion ou point de ramollissement dudit polymère thermofusible étant au moins 5 °C inférieur audit point de fusion ou point de ramollissement dudit polymère des couches de coeur,
**caractérisé en ce que**
lesdites couches de film polymère de coeur sont orientées et étirées de manière biaxiale entre 2x et 100x dans les deux sens, ou orientées et étirées de manière unidirectionnelle entre 2x et 100x dans le sens orienté,
et ledit stratifié a une résistance à la traction supérieure à 68947570 Pa (10 000 psi) mesurée par la norme ASTM-D-638, ou un module d'élasticité en flexion supérieur à 68947570 Pa (10 000 psi) mesuré par la norme ASTM-D-790, ou les deux.

2. Stratifié selon la revendication 1, dans lequel ledit polymère des couches de coeur a un point de fusion ou un point de ramollissement compris entre 100 et 350 °C et ledit polymère de revêtement thermofusible a de préférence un point de fusion ou un point de ramollissement compris entre 65 et 265 °C.

3. Stratifié selon la revendication 1, dans lequel ledit polymère des couches de coeur est choisi dans le groupe constitué par le polyéthylène, le polypropylène, le polystyrène, les copolymères de polypropylène, le téréphtalate de polyéthylène (PET), les copolymères de PET, les polyacrylates, les copolymères de polyacrylate, les copolymères d'oléfine cyclique (COC), les polyamides, les copolymères de polyamide, le téréphtalate de polybutylène (PBT), les polycarbonates (PC), les polyétherimides (PEI) et les polyéthersulfones (PES) ayant un point de fusion ou de ramollissement compris entre 100 et 350 °C, ou ledit polymère des couches de revêtement thermofusible est choisi dans le groupe constitué par les copolymères d'éthylène-acétate de vinyle (EVA), les ionomères polymères, les polyéthylènes, le polyéthylène copolymérisé avec des oléfines, les polyesters amorphes, les copolymères d'éthylène-acide acrylique (EAA), les copolymères d'éthylène-acide méthacrylique (EMA), les copolymères de polypropylène avec des monomères oléfiniques, les copolymères de poly(téréphtalate d'éthylène), les polyuréthanes, les copolyesters, le polyvinylbutyral (PVB), les polyacrylates et les polyméthacrylates.

4. Stratifié selon la revendication 1, dans lequel lesdites couches de polymère de coeur ont une épaisseur comprise entre 5 et 2000 µm et ledit stratifié a une épaisseur de 0,1 à 10 cm avec 4000 couches de film polymère de coeur.

5. Stratifié selon la revendication 1, comprenant des couches de film polymère de coeur de deux polymères différents ou plus.

6. Stratifié selon la revendication 5, comprenant des couches de différents polymères de coeur en alternance dans ledit stratifié, de sorte qu'il n'y ait pas deux couches de film polymère de coeur adjacentes se composant du même polymère.

7. Stratifié selon la revendication 5, comprenant une pluralité de sous-stratifiés, dans lequel chaque sous-stratifié se compose d'une pluralité de couches de film polymère de coeur du même polymère et de sous-stratifiés de différents polymères en alternance dans ledit stratifié, de sorte qu'il n'y ait pas deux sous-stratifiés adjacents se composant du même polymère.

8. Stratifié selon la revendication 1, dans lequel lesdites couches de film polymère de coeur et lesdites couches de revêtement thermofusible se composent de polymères incompatibles qui adhérent les uns aux autres par une couche adhésive comprise entre les deux couches de polymère, et ladite couche adhésive comprend un polyacrylate, un polyuréthane, un copolymère d'éthylène-acide acrylique (EAA), un copolymère d'éthylène-acide méthacrylique (EMA), un polyéthylène modifié par un acide ou un anhydride maléique, un polypropylène modifié par un acide ou un anhydride maléique, ou un ionomère polymère.

9. Stratifié selon la revendication 1, **caractérisé en ce qu'**il est davantage stratifié avec d'autres matières filmogènes polymères et/ou non polymères pour davantage améliorer la résistance à l'impact balistique, dans lequel lesdites matières filmogènes polymères sont choisies dans le groupe constitué par les poly(méthacrylates de méthyle) (PMMA), les polycarbonates (PC), les polyétherimides (PEI), les polyéthersulfones (PES) et les matières filmogènes composites polymères thermoplastiques et thermodurcissables, et lesdites matières filmogènes non polymères sont choisies dans le groupe constitué par le verre recuit et traité thermiquement, les céramiques et les matériaux filmogènes métalliques.

10. Article résistant à l'impact formé à partir du stratifié selon la revendication 1.

11. Article résistant à l'impact selon la revendication 10, ledit article étant une partie automobile, un stratifié polymère pour une protection balistique ou un pare-éclat contre les explosifs.

12. Article résistant à l'impact selon la revendication 10, ledit article étant transparent.

13. Article résistant à l'impact selon la revendication 11, ledit article étant un panneau de blindage d'un corps de véhicule, un système de blindage personnel, ou un écran de protection balistique.

14. Article résistant à l'impact selon la revendication 11, ledit article étant transparent et comprenant des lunettes de protection, un écran de protection faciale, une fenêtre ou un pare-vue pour un véhicule de combat ou un véhicule blindé, une fenêtre d'écran de protection balistique, une transparence d'avion, une fenêtre de sonde, un dôme infrarouge pour missiles, une fenêtre d'allumage laser pour des canons de gros et moyens calibres, une fenêtre d'un véhicule des forces de sécurité ou un blindage pour une protection de l'exécutif.
